# EUROPÄISCHE PATENTSCHRIFT

(11) **EP 3 612 031 B1**
(45) Veröffentlichungstag und Bekanntmachung des Hinweises auf die Patenterteilung: **06.08.2025**
(21) Anmeldenummer: 17826126.9
(22) Anmeldetag: 21.12.2017
(51) Int. Cl.: A21D 17/00, A23G 3/54, A23L 7/157, A21D 13/31, A21D 13/22

(54) **TEIGMASSE WELCHE BRÖSEL EINES VORGEFERTIGTEN BACKWARENERZEUGNISSES ENTHÄLT**
DOUGH MATERIAL CONTAINING CRUMBS OF A PREMADE BAKED PRODUCT
MASSE DE PÂTE CONTENANT DE LA CHAPELURE D'UN PRODUIT DE BOULANGERIE PRÉFABRIQUÉ

(30) Priorität: 19.04.2017 AT 503162017
(43) Veröffentlichungstag der Anmeldung: 26.02.2020
(73) Patentinhaber: HAMA Foodservice GesmbH, 5322 Hof bei Salzburg (AT)
(72) Erfinder: MANDL, Hans, 6542 Pfunds (AT); HAINDL, Rudolf, 5020 Salzburg (AT)
(74) Vertreter: Torggler & Hofmann Patentanwälte - Innsbruck
(86) Internationale Anmeldenummer: PCT/AT2017/060341
(87) Internationale Veröffentlichungsnummer: WO 2018/191764

(56) Entgegenhaltungen:
- EP-A1- 1 256 280
- EP-A1- 1 283 012
- EP-A1- 1 658 773
- WO-A1-94/07369
- JP-A- H0 269 166
- US-A- 4 963 376
- UTE RABE: "Zu schade für die Tonne", 1 January 2017, BOD, Norderstedt, pages: 86 - 86, XP002778140

## Beschreibung

Die Erfindung betrifft eine Teigmasse zur Herstellung eines Mantels für ein Snack-Produkt umfassend Brösel eines vorgefertigten Backwarenerzeugnisses, Flüssigkeit, Emulgatoren, Triebmittel sowie ein Snack-Produkt mit einem aus der Teigmasse hergestellten und aufgebackenen Mantel und einer Füllmasse und ein Verfahren zur Herstellung eines Snack-Produkts.

Im heutigen, zumeist stressigen Arbeitsumfeld ist es häufig üblich, mittags nur ein rasch erhältliches aber dennoch schmackhaftes und möglichst frisch zubereitetes Snack-Produkt zu sich zu nehmen. Insbesondere in Fast-Food Restaurants aber auch vermehrt in Bäckereien, Konditoreien und Supermärkten sowie in Hotels, Restaurants und im Catering werden vorgefertigte Snack-Produkte frisch aufgebacken, um die Bedürfnisse der Kunden an eine frische Zubereitung zu erfüllen. Gleichzeitig müssen sowohl in Supermärkten, Bäckereien und Konditoreien aber auch in Fast-Food Restaurants täglich enorme Mengen an Backwarenerzeugnissen, insbesondere Brot, vernichtet werden, weil Backwarenerzeugnisse oft schon einen Tag nach deren Herstellung - obwohl an sich problemlos genießbar - von den Kunden als "alt" empfunden und daher nicht mehr angenommen werden.

Die WO 94/07369 zeigt ein aus Teig hergestelltes Lebensmittel mit einer süßen oder pikanten Füllung und gegebenenfalls einem Topping, wobei der Teig vorgebacken wird. Das Lebensmittel soll für den Endverbrauch in einem Mikrowellenherd erwärmt werden. Damit eine knusprige Hülle ermöglicht wird, wird die Oberfläche des Teigs mit einer Beschichtung aus Nüssen, Körnern, Samen oder Brösel versehen. Damit wird aber weder eine Verwendungsmöglichkeit für große Bröselmengen zur Verfügung gestellt noch kann in einfacher Weise ein Mantel für ein Snack-Produkt hergestellt werden.

Die US 2014/0154362 zeigt in Konfekt mit einem Schokoladeüberzug, wobei die Füllmenge aus getrockneten süßen Bröseln besteht, die mit einer Fett-Flüssigkeit-Matrix vermischt sind. Das Konfekt stellt ein fertiges Lebensmittel dar. Eine Teigmasse zur Herstellung eines Mantels für ein Snack-Produkt wird nicht gelehrt.

Die EP 1283012 betrifft ein Eiskonfekt mit einer Hülle, in die eine gefrorene Fülle angeordnet wird. Die Hülle enthält Keksbrösel von bereits gebackenen Keksen. Durch ein Bindemittel in Form eines Sirups, der sich beim Vermischen mit den Bröseln um deren Oberfläche als Beschichtung anlagert, entsteht eine in kaltem Zustand formbare Masse, die zur Aushärtung wärmegetrocknet wird. Die Ausgangsmasse des Eiskonfekts dient nicht als Teigmasse zur Herstellung eines Mantels für ein Snack-Produkt im Sinne der vorliegenden Erfindung sondern nur zur Herstellung zweier Sandwich-Hälften, zwischen welche eine geeiste Creme angeordnet werden kann.

Die EP 1658773 betrifft ein Verfahren zur Herstellung eines Snack-Produkts aus Bröseln, die mittels einer Pressform zu einem Snack-Träger heißgeformt werden. Anschließend wird im Snack-Träger eine süße oder pikante Fülle angeordnet. Ziel dieser Erfindung ist es, ein lang haltbares, gefülltes Snack-Produkt zur Verfügung zu stellen. Damit auf Glycerin für die Teighülle verzichtet werden kann, werden Brotbrösel mit einer hohen Wasseraktivität verwendet. Alternativ kommen auch süße Brösel in Frage. Der Bröselanteil liegt dabei über 80 %, wodurch ein äußerst fester und sehr trockener Teig erzeugt wird, der nur mit einer Pressform formbar ist. Eine einfache Herstellung eines Teigmantels für ein Snack-Produkt ist nicht möglich.

Die DE 20 2011 105 658 betrifft eine Zusammensetzung zur Herstellung einer würzigen Deckschicht für ein Ofengericht, wobei die Zusammensetzung Brösel enthält. Mit der Deckschicht kann das Ofengericht mit einer knusprigen Hülle versehen werden. Ein Teig, der zur Herstellung eines Mantels für ein Snack-Produkt dient, wird nicht gelehrt.

Vor diesem Hintergrund hat sich die Erfindung die Aufgabe gestellt, eine Teigmasse für einen Mantel für ein Snack-Produkt zur Verfügung zu stellen, die einerseits die Weiterverwendung von an sich nicht mehr verkäuflichen Backwarenerzeugnissen ermöglicht und andererseits eine Ausgangsbasis für ein vor Ort rasch aufzubackendes Snack-Produkt darstellt. Für die vorliegende Erfindung ist der Boden als ein Teil des Mantels zu verstehen. Der Mantel stellt daher eine zusammenhängende Hülle dar, von der eine Füllmasse zumindest teilweise umschlossen werden kann.

Diese Aufgabe wird durch eine Teigmasse mit den Merkmalen des Anspruchs 1 gelöst.

Einer der Hauptbestandteile der Teigmasse besteht aus getrockneten oder frischen Bröseln, die aus vorgefertigten Backwaren hergestellt werden. Insbesondere können als vorgefertigte Backwarenerzeugnisse jene Backwaren verwendet werden, die an sich problemlos genießbar sind, aber nicht mehr oder nur mit großen Preisnachlässen verkauft werden, zum Beispiel Brot vom Vortag. Dadurch müssen die in Supermärkten, Bäckereien, Konditoreien und Fast-Food Restaurants bestehenden Überhänge nicht mehr vernichtet werden und können dem Nahrungskreislauf zur Weiterverarbeitung in hochwertigen und schmackhaften Snack-Produkten weiterhin zur Verfügung stehen.

Bei pikanten Anwendungen, das heißt bei Snack-Produkten mit einer innerhalb des Mantels angeordneten pikanten Füllmasse, können beispielsweise Vollkorn-, Weißbrot-, Schwarzbrot- oder Pumpernickelbrösel als Brösel verwendet werden. Bei süßen Anwendungen, das heißt bei Snack-Produkten mit einer innerhalb des Mantels angeordneten süßen Füllmasse, können beispielsweise Biskuit-, Brioche- oder Keksbrösel als Brösel verwendet werden. Sowohl bei pikanten als auch bei süßen Anwendungen sind auch Mischungen verschiedener Bröselarten verwendbar.

Ein weiterer, durch die Verwendung von Bröseln statt herkömmlichen Mehl als Teigbasis hervorgerufener positiver Effekt ist die nicht notwendige Wartezeit im Gärschrank, da die geschmackliche Ausreifung der Aromen durch die vorgebackenen Brösel bereits stattgefunden hat. Dieser gravierende Vorteil ergibt in der Produktion ein zeitliches Einsparungspotenzial von bis zu 20 % bis 25 % bei der Herstellung.

Als Ausgangsstoffe für die Brösel dienen vorgefertigte Backwarenerzeugnisse wie etwa Brot oder Biskuit, die eine gewisse Härte aufweisen müssen. Ideal sind daher etwas ältere Backwarenerzeugnisse, die an sich problemlos verzehrbar sind, im Handel aber nicht mehr verkäuflich sind, beispielsweise Brot vom Vortag. Gut geeignet für die Zwecke der Erfindung sind Backwarenerzeugnisse die bei einer Festigkeitsmessung gemäß AACC 74-09, bei der die Kompression des Backwarenerzeugnisses unter Einwirkung eines Stempels weniger als 20%, vorzugsweise weniger als 10% beträgt. Bei größerer Kompression ist das Backwarenerzeugnis zu weich und eine homogene Körnung der Brösel kann nicht gewährleistet werden, was insbesondere für eine maschinelle Fertigung von Nachteil ist.

Zur Herstellung der Brösel aus den vorgefertigten Backwarenerzeugnissen werden Gerätschaften wie zum Beispiel Mühlen, Mixer (Blender) oder Micro-Cutter verwendet. Erfindungsgemäß ist eine Körnung zwischen 14 Mesh (entspricht einer Korngröße von 1,41 mm) und 45 Mesh (entspricht 0,354 mm) vorgesehen. Bei zu grober Mahlung von weniger als 5 Mesh (entspricht einer Korngröße von mehr als 4 mm) kommt es neben optischen Einbußen auch zu Qualitätseinbußen. Zudem muss bei zu grober Körnung ein höherer Prozentsatz an Flüssigkeit zugegeben werden. Bei zu feiner Mahlung von mehr als 60 Mesh (entspricht einer Korngröße von weniger als 0,25 mm) wird die Teigmasse zu breiig, wodurch eine maschinelle Verarbeitung verunmöglicht wird.

Der Teigmasse ist darüber hinaus eine Flüssigkeitskomponente zugegeben, deren Menge von der Bindefähigkeit der verwendeten Brösel sowie von der Menge der zugegebenen Fettkomponente und des zugegebenen Emulgators abhängt. Die Fettkomponente und der Emulgator enthalten Wasser und tragen somit auch zur Erhöhung des Wasseranteils in der Teigmasse bei. Bei der spezifisch zugegebenen Flüssigkeitskomponente kann es sich um Produkte wie Milch, Sahne, Wasser und/oder Fruchtsäften handeln.

Die zugegebene Flüssigkeitskomponente dient dazu, den Wasseranteil in der Teigmasse zu erhöhen. Der Wasseranteil der Teigmasse hat den Zweck, den Teig pumpfähig zu machen. Darüber hinaus hat der Wasseranteil die Aufgabe, die in den Bröseln enthaltene bereits vorgebackene Stärke zu aktivieren. Die verkleisterte Stärke bildet neben geronnenem Klebeeiweiß die Basis für die Bindung der Teigmasse.

Zur Erhöhung der Bindefähigkeit des Teiges ist der Teigmasse darüber hinaus ein Emulgator zugegeben. Als Emulgator dienen vorgefertigte Saucenbasis und/oder Vollei, die eine hervorragende Bindefähigkeit besitzen. Insbesondere gilt dies für eine Saucenbasis, die aus Sahne und Stärke besteht. Eine derartige Saucenbasis enthält ebenso wie Vollei natürliche Emulgatoren, sodass auf die Zugabe von künstlich erzeugten Emulgatoren, die als Lebensmittelzusatzstoffe unter den E-Nummern geführt werden und häufig bei Fertignahrungsprodukten zum Einsatz kommen, verzichtet werden kann.

Erfindungsgemäß wird eine besonders hohe Bindung der zugegebenen Fettkomponente bei gleichzeitiger Auflockerung der Teigmasse durch einen Emulgator in Form einer Kombination aus Vollei, das Lecithin enthält, und einer Saucenbasis, die eine Kombination aus Tapioka- und Wachsmaisstärke enthält, erreicht. Beide Stärkearten besitzen emulgierende Eigenschaften und können so die Wirkung des Emulgators verstärken. Die Zutaten der Teigmasse können dispergieren und zu einer homogenen Masse abbinden.

Die zugegebene Fettkomponente dient neben der Eigenschaft als Geschmacksträger auch dazu, ein Durchfeuchten des Mantels nach dem Backen zu vermeiden, wodurch die Qualität und Lagerfähigkeit der erfindungsgemäßen Snack-Produkte verlängert wird. Neben der beispielsweise in Form von Produkten wie Butter, Margarine und/oder Öl erfolgenden Zugabe der Fettkomponente können auch die zugegebene Flüssigkeitskomponente und der zugegebene Emulgator einen Anteil an Fett enthalten, der die Wirkung der zugegebenen Fettkomponente zusätzlich verstärkt. Dies gilt insbesondere für einen Emulgator in Form einer vorgefertigten Saucenbasis, die aus Sahne und Stärke besteht, wobei im Falle eines hohen Sahneanteils der Emulgator zwischen 10 Gew.-% und 20 Gew.-% Fettanteil aufweisen kann.

Darüber hinaus ist der Teigmasse ein Triebmittel zur Auflockerung des Teiges zugegeben. Schließlich können der Teigmasse gegebenenfalls auch noch Gewürze und Kräuter oder Zucker beigemengt werden. Die Teigmasse entsteht durch Vermengung und Verrühren der Zutaten, wobei zusätzlich ein maschinelles oder manuelles Kneten vorgesehen sein kann.

Erfindungsgemäß liegt der Anteil der Brösel zwischen 20 Gew.-% und 60 Gew.-%, vorzugsweise zwischen 22 Gew.-% und 35 Gew.-%. Auch ein Bereich zwischen 25 Gew.-% und 30 Gew.-% kann vorgesehen sein. Dadurch können einerseits erhebliche Mengen an vorgefertigten Backwarenerzeugnissen in Form von Bröseln, das heißt in geriebener Form, weiterverarbeitet werden, wobei die Teigmasse aufgrund der Brösel und der zugegebenen Flüssigkeitskomponente und dem zugegebenen Emulgator eine weiche Konsistenz aufweist und dementsprechend leicht verarbeitet werden kann.

Ein Bröselanteil von über 60 Gew.-% würde die Teigmasse aber zu sehr verkleistern und den von Konsumenten geforderten Qualitätsansprüchen nicht gerecht werden. Des Weiteren würde die Teigmasse eine zu hohe Viskosität aufweisen und die Ausbildung eines Mantels durch Anordnen der Füllmasse in die Teigmasse wäre nicht mehr möglich. Diese gilt auch dann, wenn die Füllmasse mit einem Stempel in die Teigmasse hineingedrückt wird oder die tiefgekühlte Füllmasse selbst als Stempel fungiert.

Überraschend hat sich herausgestellt, dass im Gegensatz zu herkömmlichen Mehlprodukten nicht die Gefahr einer zu starken Verkleisterung besteht, solange der Bröselanteil nicht zu hoch ist. Die Teigmasse kann daher zu einem Mantel geformt werden, der sich gemeinsam mit dem ebenfalls zum Mantel zu zählenden Boden nach dem Backvorgang sehr gut als dichte Hülle für die innerhalb des Mantels angeordnete Füllmasse eignet. Die nicht zu große Verkleisterung gewährleistet, dass der Mantel nach dem Backvorgang keine Risse aufweist, aus denen Füllmasse austreten könnte. Dies gilt insbesondere wenn das verzehrfertige Snack-Produkt eine zumindest teilweise flüssige oder pastöse Füllmasse beinhaltet.

Für den aus der Teigmasse herzustellenden Mantel ist es von Vorteil, wenn die Brösel eine gleichbleibende Körnung aufweisen. Etwaige Abweichungen der Körnung bzw. der Feinheit der Brösel, können durch eine erhöhte oder verminderte Flüssigkeitszugabe ausgeglichen werden. Für eine gleichbleibende Qualität ist es von Vorteil, wenn die verwendeten Brösel spezifiziert werden können, wozu der erwähnte Festigkeitstest und eine Mahlung mit einem spezifizierten Mühlwerk und gegebenenfalls einem daran anschließenden Siebvorgang mit einer bestimmten Maschenweite dient.

Die Teigmasse kann in Magnetrührwerken mittels eines Bischofs oder Teighakens oder ähnlichen Mischvorrichtungen vermischt, verrührt und geknetet werden. Trotz der Tatsache, dass aufgrund des Bröselanteils nicht die Gefahr einer zu großen Verkleisterung besteht, sollte die Zubereitungszeiten kurz gehalten werden, damit die Teigmasse nicht infolge des Knetens, Verrührens und Vermischens zu stark verkleistert. Beispielsweise können Zubereitungszeiten für die Teigmasse nur zwischen 2 und 3 Minuten liegen. Derart kurze Zubereitungszeiten sind auch im Sinne eine Effizienzsteigerung bei industriell hergestellten Snack-Produkten von Vorteil.

Nachdem die Teigmasse durch Vermischen, Verrühren und gegebenenfalls Kneten der Ausgangsstoffe der Teigmasse hergestellt ist, wird daraus ein Mantel geformt, der zur Aufnahme eines schmackhaften aus einer pikanten oder süßen Masse bestehenden Füllkerns dient und auch nach dem Aufbacken die zum Teil flüssige oder pastöse Füllmasse hält, wobei der aus derselben Teigmasse hergestellte Boden ebenfalls zum Mantel zu zählen ist. Zudem dient der aufgebackene Mantel als Sättigungsbeilage. Aufgrund der Ausgangsstoffe besticht der Teig durch seine Lockerheit und Leichtigkeit. Er ist tiefkühlgeeignet und man kann den Teig kalt als auch warm verzehren.

Weitere vorteilhafte Ausführungen der Erfindung sind in den abhängigen Ansprüchen definiert.

In einer Ausführungsform der Erfindung besteht die zugegebene Flüssigkeitskomponente aus Wasser, Milch, Sahne und/oder Fruchtsäften. Der Anteil an Wasser an der Teigmasse kann zwischen 25 Gew.-% und 50 Gew.-% liegen. Der Anteil der zugegebenen Flüssigkeitskomponente kann zwischen 10 Gew.-% und 40 Gew.-%, vorzugsweise zwischen 20 Gew.-% und 30 Gew.-%, betragen. Im Falle von Milch als zugegebener Flüssigkeitskomponente trägt diese mit einem Wasseranteil von über 90 % entscheidend zum Wasseranteil der Teigmasse bei. Auch der zugegebene Emulgator weist einen hohen Wasseranteil auf. Eine Saucenbasis bestehend aus Sahne und Stärke kann einen Wasseranteil von etwa 70 % aufweisen. Auch Vollei, das ebenfalls als Emulgator zugegeben werden kann, weist einen Wasseranteil von 74,10 % auf.

Erfindungsgemäß besteht der Emulgator aus Vollei und/oder einer Saucenbasis. Der Anteil an Emulgator an der Teigmasse liegt erfindungsgemäß zwischen 10 Gew.-% und 45 Gew.-%, vorzugsweise zwischen 10 Gew.-% und 30 Gew.-%.

Die Saucenbasis umfasst einen Fettanteil und einen Stärkeanteil. Der Fettanteil kann zwischen 5 Gew.-% und 30 Gew.-% liegen, der Stärkeanteil kann zwischen 1 Gew.-% und 10 Gew.-% liegen. Bevorzugt vorgesehen ist ein Fettanteil von 15 Gew.-% und ein Stärkeanteil von 3 Gew.- %. In einer bevorzugten Ausführungsform besteht die Saucenbasis aus dem Fettanteil und dem Stärkeanteil. Der Fettanteil kann in Form von Sahne vorliegen. Der Stärkeanteil kann in Form nativer Stärke vorliegen.

In einer weiteren Ausführungsform der Erfindung besteht die zugegebene Fettkomponente aus Butter, Margarine und/oder Öl. Der Anteil an Fett an der Teigmasse kann zwischen 8 Gew.-% und 30 Gew.-% liegen.

Die erfindungsgemäße Teigmasse und das daraus hergestellte Snack-Produkt sind insbesondere dafür gedacht, maschinell hergestellt und dann in Fast-Food-Restaurants oder in Supermärkten vor Ort verzehrfertig gemacht zu werden. In der Zwischenzeit ist eine Lagerung notwendig, die zu keiner Beeinträchtigung der Teigmasse oder des Snack-Produktes führt. Bei kühler Lagerung bei einer Temperatur zwischen 0°C und 5°C oder beim Tiefkühlen bei rund - 18°C kommt es jedoch zu einer Retrogradation, wobei sich die bei der Herstellung verkleisterte Stärke wieder zurückbildet. Dabei hat sich in einer Ausführungsform der Erfindung herausgestellt, dass dieser Vorgang verhindert werden kann, indem ein Emulgator zugegeben wird, der aus einer Kombination aus Vollei und einer Mischung aus Sahne und, vorzugsweise nativer, Stärke besteht. Die Mischung aus Sahne und Stärke stellt eine Saucenbasis im Sinne der Erfindung dar.

Im Falle einer Kombination aus Vollei und Saucenbasis kann der Anteil an Vollei an der Teigmasse zwischen 10 Gew.-% und 35 Gew.-%, vorzugsweise zwischen 15 Gew.-% und 30 Gew.-% betragen. Der Anteil an Saucenbasis an der Teigmasse kann beispielsweise zwischen 10 Gew.-% und 20 Gew.-% betragen. Der Emulgator kann in einer Ausführungsform gewichtsmäßig aber auch zu gleichen Teilen aus Vollei und aus der oben beschriebenen Saucenbasis, vorzugsweise bestehend aus einer Mischung aus Sahne und Stärke, zusammengesetzt sind. Besonders bevorzugt ist wenn die Stärke der Saucenbasis aus, vorzugsweise nativer, Tapiokastärke und, vorzugsweise nativer, Wachsmaisstärke zusammengesetzt ist, wobei wiederum eine Zusammensetzung zu gleichen Teilen vorgesehen sein kann. Eine mögliche Zusammensetzung der Saucenbasis besteht aus 97 % Sahne mit einem Fettanteil von 15 % und 1,5 % nativer Tapiokastärke und 1,5 % nativer Wachsmaisstärke. Ein Beispiel einer derartigen Saucenbasis ist eine QimiQ^{®}-Saucenbasis.

Bei einem derartigen Emulgator bildet die Stärke der Saucenbasis zusammen mit dem Hühnerprotein, welches zur Stabilität beiträgt ohne abzubauen, und der vorgebackenen Stärke aus den Bröseln ein gleich bleibendes und stabiles Verkleisterungsgerüst, welches sich auch bei längerer Lagerung nicht abbaut oder zurück bildet. Insbesondere werden die Fettanteile in diesem Gerüst aufgenommen und können schwer entmischt werden.

In einer bevorzugten Ausführungsform der Erfindung handelt es sich beim Triebmittel der Backmischung um ein chemisches Backtriebmittel, vorzugsweise Backpulver. Der Anteil an Triebmittel kann zwischen 0,5 Gew.-% und 2 Gew.-% liegen.

Im Falle eines chemischen Backtriebmittels kann auf die Zugabe von biologischen Backtriebmitteln verzichtet werden. Insbesondere kann auf Hefe verzichtet werden. Dies ist für die Erfindung insofern von Vorteil, als der mit biologischen Backtriebmitteln, insbesondere Hefe, verbundene Gärvorgang wegfällt. Damit kann die Dicke des Mantels, insbesondere im seitlichen Bereich, besser an unterschiedliche Formen angepasst werden. Zudem ist damit eine Zeitersparnis in der Produktion um ca. 20 % bis 25 % verbunden, was wiederum insbesondere in der industriellen Produktion von Vorteil ist.

Die Erfindung betrifft weiters ein Snack-Produkt mit einem aufgebackenen Mantel hergestellt aus einer wie oben beschriebenen Teigmasse und einer Füllmasse.

Die Portionsgröße des Snack-Produkts kann beispielsweise von 60 g bis 350 g, vorzugsweise von 130 g bis 280 g, reichen. Möglich sind auch größere Portionen von bis zu 1000 g. Je nach Größe kann das erfindungsgemäße Snack-Produkt als Zwischenimbiss oder als fertiges Mittagessen oder auch als Fingerfood angeboten werden. Der aufgebackene Mantel dient dabei als Sättigungsbeilage. Die Füllmasse kann dabei in Abhängigkeit von der Bröselart der Teigmasse pikant (Fisch, Fleisch, Gemüse, etc.) oder süß (Frucht, Schokolade, Vanillecreme, etc.) ausgebildet sein.

Das Snack-Produkt kann tiefgekühlt gelagert werden, wobei eine Lagerfähigkeit von 6 Monaten problemlos möglich ist. In frischem Zustand ist eine gekühlte Lagerung von 3 bis 5 Tagen problemlos möglich. Wird der aus der Teigmasse hergestellte Mantel mit der darin angeordneten Füllmasse tiefgekühlt, ist nur noch ein Aufbacken notwendig, um das Snack-Produkt zu erhalten. Die tiefgekühlten Snack-Produkte können mit unterschiedlicher Gerätetechnik wie Mikrowelle, Heißluftöfen, oder Highspeed-Öfen auf einfache Art und Weise erhitzt werden. Schwankungen in der Qualität sind somit ausgeschlossen.

Der Mantel mit der darin angeordneten Füllmasse kann vor dem Einfrieren vorgebacken werden. Für die Fertigstellung des Snack-Produkts aus dem tiefgekühlten Zustand ist nur noch eine Regeneration in einem Ofen bzw. einem Highspeed-Ofen oder in der Mikrowelle notwendig. Das verzehrfertige Snack-Produkt kann problemlos über längere Zeit, zum Beispiel 4 bis 5 Stunden, ohne nennenswerten Feuchtigkeitsverlust warmgehalten werden und eignet sich damit ideal für den Verkauf in Supermärkten und Fast-Food Restaurants sowie in Hotels, Restaurants und im Catering. Die süßen Produkte können kalt oder warm verzehrt werden. Das Sortiment für die Füllmasse reicht von Gemüse, Fleisch, Fisch, Früchten, Schoko- und Vanillefüllungen bis hin zu Klassikern aus der internationalen Küche. Insbesondere können auch regionale und saisonale Besonderheiten jederzeit berücksichtigt werden. Entsprechende Vielfalt herrscht bei der Auswahl an verwendbaren Bröseln.

Die Erfindung betrifft weiters ein Verfahren zur Herstellung eines Snack-Produkts aus einer, insbesondere wie oben beschriebenen, Teigmasse mit folgenden Schritten:
- Herstellen einer Teigmasse
- Herstellen einer Füllmasse
- Einbringen der Teigmasse in eine Form
- Anordnung der Füllmasse in gefrorenem Zustand auf der Teigmasse Erfindungsgemäß ist vorgesehen, dass durch das Anordnen der Füllmasse ein Mantel zur Aufnahme der Füllmasse in der Teigmasse ausgebildet wird. Dabei weist der Mantel neben einem seitlichen Mantelbereich auch einen Boden auf, der ebenfalls zum Mantel zu zählen ist. Dadurch ist eine besonders einfache und effiziente Produktion möglich, weil eine gesonderte Ausformung des Mantels, insbesondere des seitlichen Mantelbereichs, nicht notwendig ist. Die Anordnung der Füllmasse erzeugt somit eine Vertiefung in der Teigmasse und sorgt für eine Verdrängung der pastösen Teigmasse, sodass ein ausreichend hoher seitlicher Mantelbereich gebildet wird, von der die Füllmasse nach dem Backen im Inneren des Mantels und somit im Inneren des Snack-Produkts gehalten wird. Die Füllmasse kann wie oben beschrieben in Abhängigkeit der Teigmasse pikant oder süß ausgebildet sein.

Besonders vorteilhaft ist das erfindungsgemäße Verfahren für eine in den Ansprüchen 1 bis 7 definierte Teigmasse anwendbar, die teilweise flüssig bzw. pastös und dennoch ausreichend stabil ist, um einerseits von der angeordneten Füllmasse leicht verdrängt zu werden und andererseits die Füllmasse sicher im Snack-Produkt zu halten.

Die Teigmasse kann nach oder während der Vermengung der Zutaten in Magnetrührwerken mittels eines Bischofs oder Teighakens oder ähnlichen Mischvorrichtungen zubereitet werden. Die Zubereitungszeiten können sehr kurz sein, beispielsweise nur ca. 2 bis 3 Minuten, damit die Stärke der Brösel nicht zu kleistrig wird. Die Konsistenz der Teigmasse ist so ausgelegt, dass ein einfaches und unkompliziertes Abfüllen über einen Kolbenfüller oder dergleichen möglich ist.

Die Teigmasse wird in der Mitte einer dafür vorgesehenen Form platziert, welche aus Papier bzw. Pappkarton, Metall wie zum Beispiel Edelstahl oder Aluminium, keramischen Materialien wie etwa Porzellan oder einem Kunststoff wie beispielsweise Silikon bestehen kann. Wichtig ist, dass das Material den Backprozessen entsprechen muss. Die unterschiedlichen Materialien der Formen können Auswirkungen auf die Backzeit haben.

Nach der Dosierung der Teigmasse in einer Form und der Formgebung der Teigmasse durch die Füllmasse kann man sofort zum Backprozess übergehen, insbesondere wenn in der Teigmasse auf biologische Backtriebmittel verzichtet werden kann. Durch die einfache Teigführung und die problemlose Dosierung der Masse in die Form und deren Umverteilung durch Anordnung der Füllmasse kann eine Automatisierung in der Produktion leicht angestrebt werden. Dies führt zu einer besseren Preisgestaltung, wobei bei einer wie oben beschriebenen Teigmasse zusätzlich Überproduktionen von Backwarenerzeugnissen sinnvoll weiter verwendet werden können. Darüber hinaus wird die Teigmasse unter solchen Bedingungen erheblich weniger thermisch belastet als herkömmliche Brotteige. Durch das zentrische Einbringen der Fülle auf der Teigmasse entsteht ein gleichmäßiger Rand, der beim Backen außen kross und innen weich ist.

Bevorzugt ist vorgesehen, dass die Form als Mantelfläche eines Zylinders oder Prismas ausgebildet ist. Die ausreichend pastöse Teigmasse kann sich sehr gut an Formen anpassen. Dadurch weist Mantel des Snack-Produkts dann ebenfalls eine zylindrische oder prismatische, nach oben offene Form auf.

Die Volumenerhöhung findet rein im Backofen statt. Die unterschiedlichen Ofenarten wie zum Beispiel Stikkenöfen, Umluftöfen, etc. spielen dabei keine Rolle.

Im erfindungsgemäßen Verfahren wird die Füllmasse in tiefgekühltem Zustand auf der Teigmasse angeordnet und dann in die Form gedrückt. Insbesondere wenn es sich ursprünglich um eine flüssige Füllmasse handelt, kann diese etwa in einer Darmhülle angeordnet sein. Für die Anordnung in der Teigmasse werden dann von der gefrorenen Füllmasse entsprechende Portionen abgeschnitten. Die tiefgekühlte Füllmasse fungiert als Stempel, von dem die pastöse Teigmasse verdrängt und aufgrund der Form, welche ein Ausweichen der Teigmasse verhindert, ein Mantel gebildet wird, der genügend stark ausgebildet ist und auch einen ausreichend hohen seitlichen Mantelbereich aufweist, um die Füllmasse nach dem Backen im Snack-Produkt zu halten.

Das Anordnen der Füllmasse in tiefgekühltem Zustand hat den Vorteil, dass ein Snack-Produkt mit einer im verzehrfertigen Zustand teilweise flüssigen bzw. pastösen Füllung herstellbar ist. Durch die Anordnung einer gefrorenen Füllmasse, die aus flüssigen bzw. pastösen Komponenten hergestellt ist, wird ein Mantel gebildet. Die gefrorene Füllmasse wird während des Backprozesses aufgetaut und wird dadurch - je nach den Inhaltsstoffen der Füllmasse - flüssig bzw. pastös. In diesem Fall ist eine in den Ansprüchen 1 bis 7 definierte Teigmasse von besonderem Vorteil, da aufgrund des Bröselanteils ein Austreten der teilweise flüssigen bzw. pastösen Füllung verhindert wird. Dadurch ist ein Snack-Produkt herstellbar, welches rasch und einfach verzehrfertig gemacht werden kann und einen schmackhaften teilweise flüssigen bzw. pastösen Füllkern aufweisen kann.

Die Anordnung des gefrorenen Füllkerns bietet dabei zudem den Vorteil, dass der Außenmantel ausreichend gebacken ist bis die Füllmasse aufgetaut ist, um einen aufgetauten Füllkern, der flüssige bzw. pastöse Komponenten aufweist, im verzehrfertigen Snack-Produkt sicher anzuordnen, ohne dass flüssige oder pastöse Komponenten durch den Mantel austreten.

Teilweise flüssige bzw. pastöse Füllungen können in beliebigen Formen eingefroren werden, sodass beinahe beliebige Formen für das Snack-Produkt realisierbar sind. Dies ist wiederum insbesondere für eine Teigmasse gemäß der Ansprüche 1 bis 7 von Vorteil, die ausreichend pastös ist und sich ebenfalls sehr gut an verschiedene Formen anpassen kann.

Das Anordnen einer Füllmasse in tiefgekühltem Zustand hat zudem den Vorteil, dass keine Standzeiten notwendig sind, die Teigmasse mit der angeordneten Füllmasse kann direkt in den Ofen gegeben werden, um das Snack-Produkt verzehrfertig zu machen.

Ein Eindrücken der Füllmasse ist aber auch bei einer frischen Füllmasse möglich. Hier kann es gegebenenfalls notwendig sein, einen gesonderten Stempel zu verwenden, der die Füllmasse während des Eindrückens zusammenhält. Wiederum bildet sich aufgrund des Eindrückens in die pastöse Teigmasse der Mantel, da die Form ein Ausweichen der Teigmasse verhindert.

Es wird bei der Zubereitung eine Ofentemperatur von 200°C bis 220°C angestrebt die Backzeit kann je nach Größe und Dicke des Mantels und der Füllmasse zwischen 10 bis 25 min. betragen, wobei in Highspeed-Öfen und in der Mikrowelle deutlich kürzere Backzeiten von 1 bis 2 min. bzw. 5 bis 6 min. realisierbar sind. Die Kerntemperatur des Snack-Produktes sollte ca. 85°C bis 90°C aufweisen um den Hygienerichtlinien und Haltbarkeitsvorgaben durch Pasteurisieren zu entsprechen. Die Füllmasse muss in ausreichender Weise erhitzt werden.

Der Mantel kann in einer Ausführungsform der Erfindung hinsichtlich des Gewichts ein Verhältnis zur Füllmasse von ca. 60 zu 40 aufweisen. Aber auch andere, insbesondere höhere Prozentsätze, sind für die Füllmasse möglich.

Nach dem Back- und Abkühlprozess wird das Snack-Produkt feuchtigkeitsdicht verpackt und tiefgekühlt. Hierzu sind insbesondere Folienverpackungen geeignet die gasdicht verschweißt und versiegelt werden. Der zwischen Snack-Produkt und Verpackung verbleibende Luftraum kann zur längeren Haltbarkeit mit Gasen wie Stickstoff oder Kohlendioxid aufgefüllt werden. Alternativ ist auch ein direktes Tiefkühlen der im Mantel angeordneten Füllmasse möglich. Für Verpackungen welche sofort ausgeliefert werden, ist eine Oberflächenpasteurisation von Vorteil, welche bereits beim Backprozess stattgefunden hat.

Nachfolgend werden die Zutaten zweier Ausführungsformen einer erfindungsgemäßen Teigmasse angeführt, wobei die erste Ausführungsform eine pikante Teigmasse zur Aufnahme einer pikanten Füllmasse betrifft, während die zweite Ausführungsform eine süße Teigmasse zur Aufnahme einer süßen Füllmasse betrifft.

| **Pikante Teigmasse** | |
|---|---|
| Zutaten: | Anteil (Gew.-%): |
| Pikante Weißbrotbrösel | 25,91 |
| Vollei | 21,59 |
| QimiQ^{®}-Saucenbasis | 10,80 |
| Salz | 0,32 |
| Vollmilch | 26,99 |
| Flüssige Butter | 12,96 |
| Backpulver | 1,08 |
| Pfeffer gemahlen | 0,02 |
| Petersilie frisch gehackt | 0,11 |
| Thymian frisch gehackt | 0,11 |
| Majoran frisch gehackt | 0,11 |

Für die Zubereitung wird zunächst die Saucenbasis mit dem Vollei verrührt. Anschließend wird die flüssige Butter langsam eingerührt bis eine homogene Masse entsteht. Das Salz wird mit dem Backpulver vermischt und untergerührt. Anschließend werden die pikanten Brösel zugegeben und gut verrührt. Schließlich werden die Milch und die Gewürze zugegeben und verrührt, sodass eine erfindungsgemäße Teigmasse entsteht. Die Teigmasse kann man für ca. 15 Minuten quellen lassen und danach weiterverarbeiten, d. h. in die Teig-Form füllen und die Füllmasse auf der Teigmasse anordnen.

| **Süße Teigmasse** | |
|---|---|
| Zutaten: | Anteil (Gew.-%): |
| Süße Keksbrösel | 29,63 |
| Vollei | 18,52 |
| QimiQ^{®}-Saucenbasis | 12,35 |
| Kristall Zucker | 4,94 |
| Vollmilch | 18,52 |
| Flüssige Butter | 14,81 |
| Backpulver | 1,23 |

Wiederum wird zunächst die Saucenbasis mit dem Vollei verrührt und die flüssige Butter langsam eingerührt bis eine homogene Masse entsteht. Der Zucker wird mit dem Backpulver vermischt und untergerührt. In weiterer Folge werden die süßen Brösel zugegeben und gut verrührt. Anschließend wird die Milch zugegeben und ebenfalls verrührt. Danach kann man die daraus entstandene Teigmasse ca. 15 Minuten quellen lassen und anschließend weiterverarbeiten.

Weitere Einzelheiten und Vorteile der vorliegenden Erfindung werden anhand der Figurenbeschreibung unter Bezugnahme auf die Zeichnungen im Folgenden näher erläutert.

Darin zeigt:
- Fig. 1a bis 1e: schematische Darstellungen verschiedener Schritte des erfindungsgemäßen Verfahrens,
- Fig. 2: eine schematische Darstellung eines alternativen Verfahrensschrittes, und
- Fig. 3: eine schematische perspektivische Ansicht eines erfindungsgemäßen Snack-Produktes.

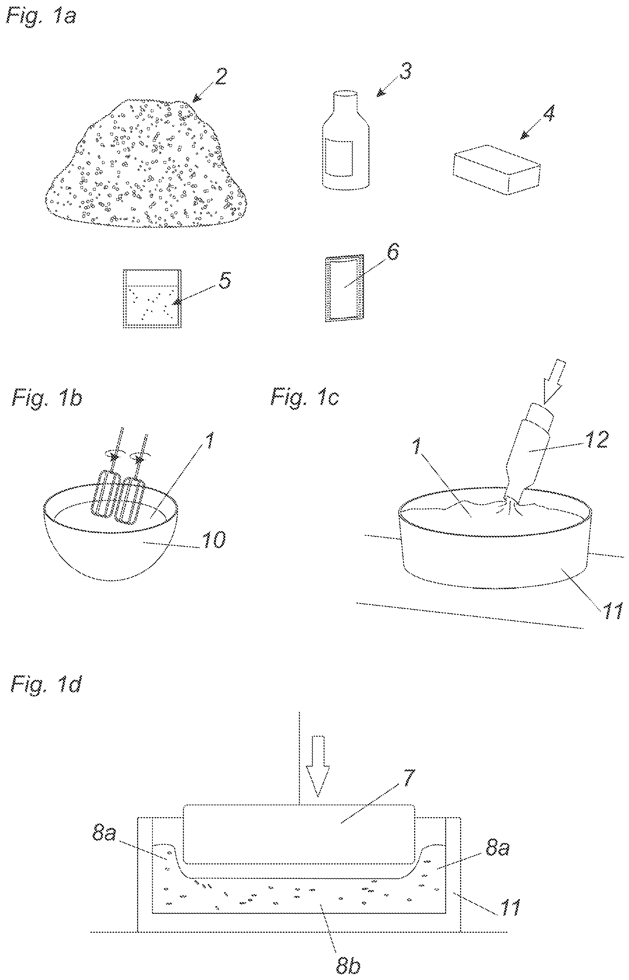

In Fig. 1a sind die wesentlichen Zutaten der erfindungsgemäßen Backmasse 1 schematisch dargestellt, nämlich Brösel 2, eine Flüssigkeitskomponente 3 in Form von Milch, eine Fettkomponente 4 in Form von Butter, einen Emulgator 5 in Form einer Kombination aus Vollei und einer Saucenbasis bestehend aus Sahne und nativer Stärke und einem Triebmittel 6 in Form von Backpulver.

Die Zutaten werden vermengt und in einer Maschine 10 verrührt und geknetet, wie dies schematisch in Fig. 1b gezeigt ist. Um eine zu starke Verkleisterung zu vermeiden, wird die Verarbeitungszeit in der Maschine 10 kurz gehalten.

In weiterer Folge wird die Teigmasse 1 gemäß Fig. 1c in eine Form 11 gefüllt. Aufgrund der Zutaten ist die Teigmasse 1 ausreichend pastös, sodass zu diesem Zweck ein herkömmlicher Kolbenfüller 12 verwendet werden kann. Im dargestellten Fall ist die Form 11 eine ZylinderMantelfläche und kann beispielsweise aus Papier oder Metall bestehen.

Wie schematisch in Fig. 1d dargestellt, wird die Füllmasse 7 in weiterer Folge auf der in die Form 11 gefüllten Teigmasse 1 angeordnet. Die Füllmasse 7 kann in Abhängigkeit der Brösel 1 pikant oder süß sein. Im dargestellten Fall ist die Füllmasse 7 tiefgekühlt und dient selbst als Stempel, von dem die pastöse Teigmasse 1 verdrängt wird. Die Form 11 verhindert ein Ausweichen der Teigmasse 1, sodass durch das Anordnen der Füllmasse 1 ein Mantel 8 zur Aufnahme der Füllmasse 7 gebildet wird. Indem die Füllmasse 7 in die Teigmasse 1 gedrückt wird, erhöht sich der seitliche Bereich 8a des Mantels 8, von dem die Füllmasse 7 gemeinsam mit dem Boden 8b gehalten wird.

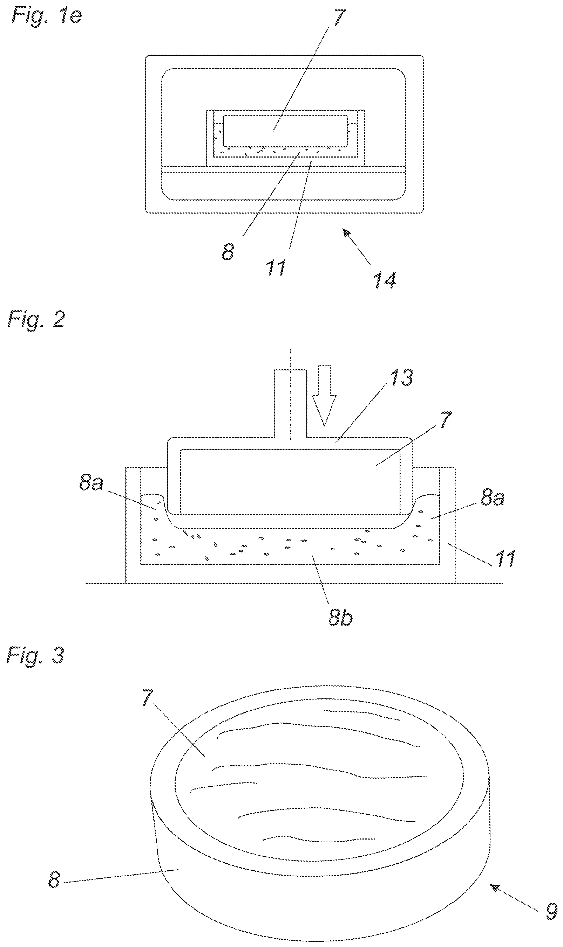

Eine alternative Form der Anordnung der Füllmasse 7 auf der Teigmasse 1 ist schematisch in Fig. 2 gezeigt. In diesem Fall ist die Füllmasse 7 nicht tiefgefroren. Die Füllmasse 7 wird auf der in die Form gefüllten Teigmasse 1 platziert und mittels eines Stempels 13 in die Teigmasse 1 gedrückt. Dadurch bildet sich der Mantel 8 mit seitlichem Mantelbereich 8a zur Aufnahme der Füllmasse 7.

Schließlich wird der Teigmantel 8 mit der darin angeordneter Füllmasse 7 in einem Ofen 14 vorgebacken. Je nach Ofentyp kann hierzu eine Temperatur zwischen 180°C und 225°C und eine Zeit zwischen 15 und 25 Minuten vorgesehen sein. Dies ist schematisch in Fig. 1e gezeigt. Das dadurch hergestellte Snack-Produkt 9 kann nun verpackt und gegebenenfalls tiefgekühlt werden und in weiterer Folge ausgeliefert werden.

Nach Aufbacken oder Regenerieren steht dann ein verzehrfertiges und schmackhaftes Snack-Produkt 9 dem Endkonsumenten zur Verfügung. Ein solches Snack-Produkt 9 ist in einer perspektivischen Ansicht schematisch in Fig. 3 dargestellt. Der aus dem seitlichen Mantelbereich 8a und dem Boden 8b bestehende Mantel 8 bildet eine nach oben offene verzehrbare Hülle von der die Füllmasse 7 im verzehrfertigen Zustand des Snack-Produkts 9 gehalten wird.

## Patentansprüche

1. Teigmasse zur Herstellung eines Mantels für ein aufzubackendes Snack-Produkt umfassend die Bestandteile:
- Brösel eines vorgefertigten Backwarenerzeugnisses,
- Fettkomponente,
- Flüssigkeitskomponente,
- Emulgator und
- Triebmittel,
wobei der Emulgator (5) in Form von Vollei, das Lecithin enthält, und einer Saucenbasis, bestehend aus Sahne und Stärke, die eine Kombination aus Tapioka- und Wachsmaisstärke enthält, zugegeben ist, **dadurch gekennzeichnet, dass** die Körnung der Brösel zwischen 1,41 mm (14 Mesh) und 0,354 mm (45 Mesh beträgt, dass der Anteil der Brösel (2) zwischen 20 Gew.-% und 60 Gew.-%, vorzugsweise zwischen 22 Gew.-% und 35 Gew.-%, beträgt und dass der Anteil an Emulgator (5) an der Teigmasse (1) zwischen 10 Gew.-% und 45 Gew.- % liegt.

2. Teigmasse nach Anspruch 1, **dadurch gekennzeichnet, dass** die Flüssigkeitskomponente (3) in Form von Wasser, Milch, Sahne und/oder Fruchtsäften zugegeben ist.

3. Teigmasse nach Anspruch 1 oder 2, **dadurch gekennzeichnet, dass** die Fettkomponente (4) in Form von Butter, Margarine oder Öl zugegeben ist.

4. Teigmasse nach einem der Ansprüche 1 bis 3, **dadurch gekennzeichnet, dass** das Triebmittel (6) in Form chemischer Backtriebmittel, vorzugsweise in Form von Backpulver, zugegeben ist.

5. Teigmasse nach einem der Ansprüche 1 bis 4, **dadurch gekennzeichnet, dass** der Anteil an Wasser an der Teigmasse (1) zwischen 25 Gew.-% und 75 Gew.-% liegt.

6. Teigmasse nach einem der Ansprüche 1 bis 5, **dadurch gekennzeichnet, dass** der Anteil an Fett an der Teigmasse (1) zwischen 8 Gew.-% und 30 Gew.-% liegt.

7. Teigmasse nach einem der Ansprüche 1 bis 6, **dadurch gekennzeichnet, dass** der Anteil an Triebmittel (6) zwischen 0,5 Gew.-% und 2 Gew.-% liegt.

8. Snack-Produkt mit einem aufgebackenen Mantel (8) hergestellt aus einer Teigmasse (1) nach einem der Ansprüche 1 bis 7 und einer im Mantel (8) angeordneten Füllmasse (7).

9. Verfahren zur Herstellung eines Snack-Produkts aus einer Teigmasse, insbesondere nach einem der Ansprüche 1 bis 7, umfassend die folgenden Schritte:
- Herstellen einer Teigmasse, wobei die Teigmasse die Bestandteile Brösel eines vorgefertigten Backwarenerzeugnisses, Fettkomponente, Flüssigkeitskomponente, Emulgator und Triebmittel enthält, wobei der Emulgator (5) in Form von Vollei, das Lecithin enthält, und einer Saucenbasis, bestehend aus Sahne und Stärke, die eine Kombination aus Tapioka- und Wachsmaisstärke enthält, zugegeben ist, wobei die Körnung der Brösel zwischen 1,41 mm (14 Mesh) und 0,354 mm (45 Mesh) beträgt, wobei der Anteil der Brösel (2) zwischen 20 Gew.-% und 60 Gew.-% beträgt und der Anteil an Emulgator (5) an der Teigmasse (1) zwischen 10 Gew.-% und 45 Gew.-% liegt,
- Herstellen einer Füllmasse,
- Einbringen der Teigmasse in eine Form und
- Anordnung der Füllmasse in gefrorenem Zustand auf der Teigmasse,
**dadurch gekennzeichnet, dass** durch das Anordnen der Füllmasse (7) auf der Teigmasse (1) ein Mantel (8) zur Aufnahme der Füllmasse (7) in der Teigmasse (1) ausgebildet wird, wobei die Füllmasse (7) in die in die Form (11) eingebrachte Teigmasse (1) eingedrückt wird.

10. Verfahren nach Anspruch 9, **dadurch gekennzeichnet, dass** die Form (11) als Mantelfläche eines Zylinders oder Prismas ausgebildet ist und aus Papier, Metall, keramischen Materialien und/oder Kunststoff besteht.

## Claims

1. Dough for the production of an outer casing for a snack product including the ingredients:
- crumbs of a previously made bakery product
- fat component
- liquid component
- emulsifier
- raising agent
wherein the emulsifier (5) is added in the form of whole egg, which contains lecithin, and a sauce base which contains a combination of tapioca and waxy maize starch, **characterized in that** grain size of the crumbs is between 1,41 mm (14 mesh) and 0,345 mm (45 mesh), that the proportion of the crumbs (2) is between 20% by weight and 60% by weight, preferably between 22% by weight and 35% by weight, and that the proportion of emulsifier (5) in the dough (1) is between 10% by weight and 45% by weight.

2. Dough according to claim 1, **characterized in that** the liquid component (3) is added in the form of water, milk, cream or fruit juices or in the form of a combination of said substances.

3. Dough according to claim 1 or 2, **characterized in that** the fat component (4) is added in the form of butter, margarine or oil.

4. Dough according to one of claims 1 to 3, **characterized in that** the raising agent (6) is added in the form of chemical baking raising agent, preferably in the form of baking powder.

5. Dough according to one of claims 1 to 4, **characterized in that** the proportion of water in the dough (1) is between 25% by weight and 75% by weight.

6. Dough according to one of claims 1 to 5, **characterized in that** the proportion of fat in the dough (1) is between 8% by weight and 30% by weight.

7. Dough according to one of claims 1 to 6, **characterized in that** the proportion of raising agent (6) is between 0.5% by weight and 2% by weight.

8. Snack product with a crisped outer layer (8) produced from a dough (1) according to one of claims 1 to 7 and a filling (7) arranged in the casing (8).

9. Method of producing a snack product from a dough, in particular according to one of claims 1 to 7, including the following steps:
- producing a dough, wherein the dough is including the ingredients crumbs of a previously made bakery product, fat component, liquid component, emulsifier and raising agent, wherein the emulsifier (5) is added in the form of whole egg, which contains lecithin, and a sauce base which contains a combination of tapioca and waxy maize starch, wherein the grain size of the crumbs is between 1,41 mm (14 mesh) and 0,345 mm (45 mesh), wherein the proportion of the crumbs (2) is between 20% by weight and 60% by weight and the proportion of emulsifier (5) in the dough (1) is between 10% by weight and 45% by weight
- producing a filling
- introducing the dough into a mould
- arranging the filling in the frozen state on the dough, **characterized in that** an outer casing (8) for receiving the filling (7) is formed in the dough (1) by arranging the filling (7) on the dough (1), wherein the filling (7) is pushed into the dough (1) introduced into the mould (11).

10. Method according to claim 9, **characterized in that** the mould (11) is in the form of the peripheral surface of a cylinder or prism and is made of paper, metal, ceramic materials and/or plastic.

## Revendications

1. Masse de pâte pour la fabrication d'une enveloppe pour un produit de snack à cuire, comprenant les éléments suivants :
- miettes d'un produit de boulangerie préfabriqué,
- matière grasse,
- composant liquide,
- émulsifiant et
- agent levant,
dans laquelle l'émulsifiant (5) est ajouté sous forme d'œufs entiers, contenant de la lécithine, et d'une base de sauce consistent en crème et en fécule contentant une combinaison de fécule de tapioca et de maïs cireux, **caractérisée en ce que** la granulométrie des miettes est comprise entre 1,41 mm (14 mesh) et 0,345 mm (45 mesh), **en ce que** la proportion de miettes (2) est comprise entre 20 % en poids et 60 % en poids, de préférence entre 22 % en poids et 35 % en poids, et **en ce que** la proportion d'émulsifiant (5) dans la masse de pâte (1) est comprise entre 10 % en poids et 45 % en poids.

2. Masse de pâte selon la revendication 1, **caractérisée en ce que** le composant liquide (3) est ajouté sous forme d'eau, de lait, de crème et/ou de jus de fruits.

3. Masse de pâte selon la revendication 1 ou 2, **caractérisée en ce que** la matière grasse (4) est ajoutée sous forme de beurre, de margarine ou d'huile.

4. Masse de pâte selon l'une des revendications 1 à 3, **caractérisée en ce que** l'agent levant (6) est ajouté sous forme d'agents levants chimiques, de préférence sous forme de levure chimique.

5. Masse de pâte selon l'une des revendications 1 à 4, **caractérisée en ce que** la proportion d'eau dans la masse de pâte (1) est comprise entre 25 % en poids et 75 % en poids.

6. Masse de pâte selon l'une des revendications 1 à 5, **caractérisée en ce que** la proportion de matière grasse dans la masse de pâte (1) est comprise entre 8 % en poids et 30 % en poids.

7. Masse de pâte selon l'une des revendications 1 à 6, **caractérisée en ce que** la proportion d'agent levant (6) est comprise entre 0,5 % en poids et 2 % en poids.

8. Produit de snack avec une enveloppe cuite (8), fabriqué à partir d'une masse de pâte (1) selon l'une des revendications 1 à 7, et avec une masse de remplissage (7) disposée dans l'enveloppe (8).

9. Procédé de fabrication d'un produit de snack à partir d'une masse de pâte, en particulier selon l'une des revendications 1 à 7, comprenant les étapes suivantes :
- préparation d'une masse de pâte, dans laquelle la masse de pâte contient les éléments suivants: miettes d'un produit de boulangerie préfabriqué, matière grasse, composant liquide, émulsifiant et agent levant, dans laquelle l'émulsifiant (5) est ajouté sous forme d'œufs entiers, contenant de la lécithine, et d'une base de sauce consistent en crème et en fécule contentant une combinaison de fécule de tapioca et de maïs cireux, dans laquelle la granulométrie des miettes est comprise entre 1,41 mm (14 mesh) et 0,345 mm (45 mesh), dans laquelle la proportion de miettes (2) est comprise entre 20 % en poids et 60 % en poids et dans laquelle la proportion d'émulsifiant (5) dans la masse de pâte (1) est comprise entre 10 % en poids et 45 % en poids,
- préparation d'une masse de remplissage,
- répartition de la masse de pâte dans un moule et
- disposition de la masse de remplissage à l'état congelé sur la masse de pâte,
**caractérisé en ce que** la disposition de la masse de remplissage (7) sur la masse de pâte (1) permet de former une enveloppe (8) destinée à recevoir la masse de remplissage (7) dans la masse de pâte (1), dans lequel la masse de remplissage (7) est enfoncée dans la masse de pâte (1) répartie dans le moule (11).

10. Procédé selon la revendication 9, **caractérisé en ce que** le moule (11) est réalisé sous forme de surface d'enveloppe d'un cylindre ou d'un prisme et consiste en papier, métal, matériaux céramiques et/ou matière plastique.
